# EUROPEAN PATENT APPLICATION

(11) **EP 2 110 589 A2**
(43) Date of publication of application: **21.10.2009**
(21) Application number: 08075948.3
(22) Date of filing: 17.12.2008
(51) Int. Cl.: F16K 27/06, E03B 7/10, F16L 55/00

(54) **Water device with antifreeze protection**

(30) Priority: 18.12.2007 IT MI20072361
(71) Applicant: Spluga di Andrea Cagnacci & C. s.n.c., 09010 Vallermosa, (CA) (IT)
(72) Inventor: Cagnacci, Andrea, 09010 Vallermosa, Cagliari (IT)

(57) **Abstract**

Water device including at least an antifreeze phase advancer defined by a compressible volume (30), fit to compress giving an outlet to the volume fluid during its freezing; the fluid is contained in such water device which can be, for example, a piping or a part of it or a body valve (100).

## Description

### Invention field

This invention refers to a water device, particularly pipe fittings and a ball valve.

### Actual technical state

Ball valves obtained by the known technique are tending to break when the fluid inside the same body valve freezes.

As known, when water is made cold to the freezing point, it undergoes a 9% volume increase; this volume extension is the main cause of the ball valve breaking, as, particularly when the valve is closed, extension has no outlet.

One of the critical points is represented by the interspace existing in all ball valves between the sphere or ball, the body valve and the two Teflon washers that, even if very small, puts the sphere and the seat obtained in the body valve through a strong pressure. The rest of the body valve appears further stressed by the further fluid expansion contained in it, as well as in the open and closed position sphere with a consequent cracking of the body and damaging of the sphere.

This problem is present in all ball valves types independently from the thread type, which can be female-female or male-female and from the nominal pressure of construction use, further indicated by Pn; obviously lower is the Pn higher will be the damage possibility in freezing case, since a high Pn use corresponds to a measuring which provides stronger and/or thicker materials; in fact Pn determines inner non-stop pressure to which the valve keeps safely its functionality.

So, in order that a piping, or a control element can resist to the fluid freezing in them, it's necessary to strengthen them with the consequent increase of costs of raw materials and of the heavier manufactured products transport.

### Invention summary

The aim of this invention is to provide a water device fit to resist to the volume fluid fluctuations contained in it, when it's subject to freeze, avoiding the breaking of the same device.

Therefore, this invention suggests to achieve the aims discussed above with the realisation of a water device in compliance with claim 1.

According to another purpose of the invention called water device, it can define a pipe fitting, but not exclusively, a ball valve equipped with at least an antifreeze phase advancer.

The subordinate claims describe favourite invention realisations and are an integral part of the description.

### Short description of Illustrations

Further invention features and advantages will be clearer according to the more detailed description in a favourite form of realisation, but not exclusive, of a water device, illustrated as example and not exclusively, with the aid of illustration tables where:
Illustration 1 represents a pipe fitting with an antifreeze phase advancer made by a waterproof elastomeric buffer;
Illustration 2 shows a pipe fitting in which there is an antifreeze phase advancer made by an elastic membrane bordering on an air volume;
Illustration 3 represents a ball valve in open position with an elastomeric buffer under the ball valve;
Illustration 4 shows the valve from Illustration 3 in a closed position, with, in evidence, the filling areas where a fluid stands;
Illustration 5 represents the valve from Illustration 4 in which it is shown how the frozen fluid expansion has an outlet in the phase advancer;
Illustration 6 shows a valve in which there is an elastomeric buffer fit to counterbalance the fluid contained in the valve above area.

### Detailed description of a favourite realisation form of the invention

According to this invention, a Illustration 1 (20) elastic element fit to restrict a compressible volume can effectually be realised from a Illustration 1 (20), Illustration 3 (30) and Illustration 6 (40) waterproof elastomeric buffer, that takes up some volume in the water device, prevents the fluid contained in it from seeping in that volume which, afterwards, is available during the fluid freezing passage and expansion.

Another favourite realisation, called elastic element fit to restrict a compressible volume is represented by a membrane which seals a dap full of a compressible gas or in general of air.

In reference to Illustration 1, a pipe fitting connector has a Illustration 1 (10) dap where is seated a Illustration 1 (20) waterproof elastomeric buffer. The previous compresses when a fluid contained in the pipe dilates in the freezing passage.

Illustration 2 shows an example of a favourite realisation where a Illustration 2 (200) membrane seals a Illustration 2 (1000) air volume restricted by the membrane and a Illustration 2 (10) dap.

According to illustrations 3, 4 and 5, a ball valve includes a Illustration 3 (100) body valve defining the whole external wrapping of the same ball valve, a Illustration 3 (102) ball or sphere equipped with a hole for the fluid transition, a Illustration 3 (103) small shaft fit to transfer a movement engraved by a Illustration 3 (104) handle to the Illustration 3 (102) ball or sphere, in order to balance the fluid flow.

The area between the Illustration 3 (102) ball or sphere and the Illustration 3 (100) body valve is a Illustration 3 (121) interspace which usually tends to fill up with a fluid when, for the first time, the valve is set to closing; after this manipulation, in fact, the fluid inside the ball is in contact with Illustration 3 (121) interspace which fills up.

In the favourite realisation shown in the different illustrations, an anti-freeze phase advancer has been preset under the Illustration 3 (102) ball, in detailed, a Illustration 3 (10) dap has been obtained inside a Illustration 3 (100) body valve where a Illustration 3 (30) elastomeric buffer is set. Illustration 5 shows the fluid freezing effect inside the Illustration 3 (121) interspace which has a natural outlet in the expansion area produced by the Illustration 3 (30) elastomeric buffer crushing.

This example refers to the fluid compensation inside the Illustration 3 (121) interspace. Illustration 6 presents an example where a Illustration 6 (40) anti-freeze phase advancer is set in the ball valve interconnection area Illustration 6 (111) with a generic piping upon the same ball valve.

In fact, a couple of anti-freeze phase advancers, set in that way, are enough to protect a valve from damages caused by the fluid freezing inside it.

Another anti-freeze phase advancer can anyway be set at the extremity under the valve.

These examples aren't to be considered restrictive, in fact, others anti-freeze phase advancers can be set in the areas subject to strains caused by the fluid freezing, for example applying others anti-freeze phase advancers in the different parts of the body valve.

A favourite realisation provides a female-female, male-female or male-male sleeve, of any kind of metallic and non-metallic material, which includes an anti-freeze phase advancer fit to be set in new or preexistent systems, so that it can increase the internal volume during the fluid expansion in the system.

This invention realises an adequate protection to any kind of new or preexistent hydraulic circuit where it is possible; and it introduces an example of equipped control anti-freeze phase advancer body regarding the developing interspaces in it.

Elastomers used are fit to keep their elasticity features in low and high temperatures, temperature range of valve use permitting; they are fit to, in case of alimentary fluid transport or potable water, satisfy hygienic regulations claimed by the current laws too.

In general, these elastomeric buffers are insert in appropriate hollows or empty areas, during the valve construction phase if they aren't accessible from the outside when the valve is finally assembled, or they are set afterwards when these hollows are accessible from the outside, for example, with the realisation of threaded inspection plugs subsequently sealed after the buffer application.

The expansion area and the buffer dimension are set in relation to the material modulus of elasticity the buffer is made of and to the fluid volume regarding, in the freezing phase, the expansion area of the same buffer.

These specific ways of realisation described here don't represent a limit of the demand which includes all the invention versions defined by the claims.

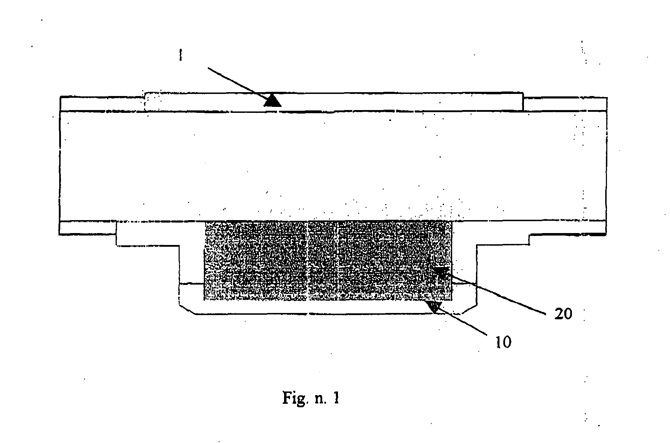

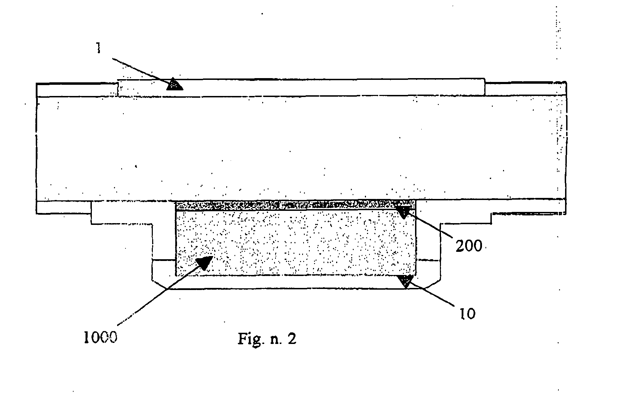

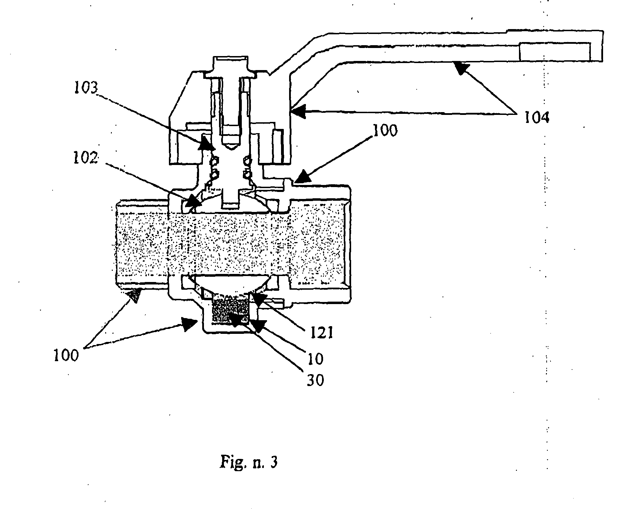

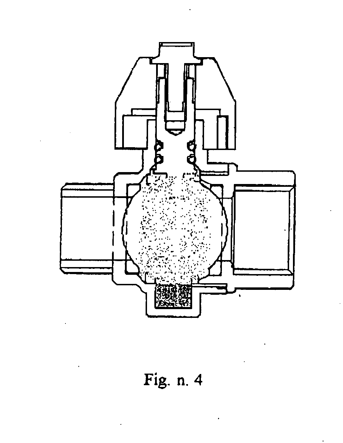

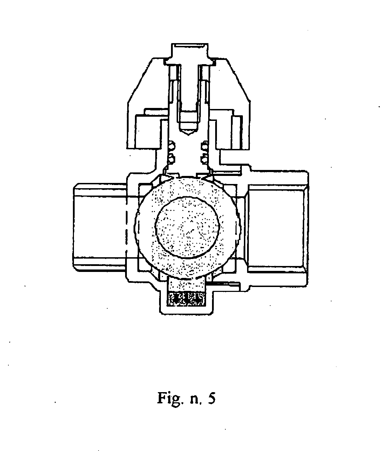

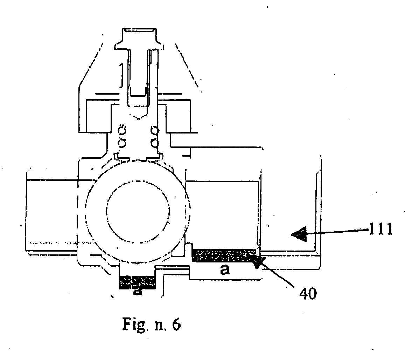

## Claims

1. Water device **characterized by** the inclusion of an elastic element Illustration 1 (20), Illustration 3 (30), Illustration 6 (40), Illustration 2 (200) defining an anti-freeze phase advancer fit to restrict a compressible volume in the same water device, making the volume available during the expansion of a freezing fluid in it.

2. Device according to claim 1, where in the anti-freeze phase advancer there is a waterproof elastomeric buffer Illustration 1 (20), Illustration 3 (30), Illustration 6 (40).

3. Device according to claim 1, where in the anti-freeze phase advancer there is a membrane Illustration 2 (200) bordering on a compressible gas volume Illustration 2 (1000).

4. Device according to claim 3, where the compressible gas is an air.

5. Device according to claim 1, defining a ball valve which includes a body valve Illustration 3 (100) that realizes an external wrapping of the same ball valve, a ball or sphere Illustration 3 (102) equipped with a hole for the fluid transition, a small shaft Illustration 3 (103) fit to transfer a movement engraved by a handle Illustration 3 (104) to the ball or sphere Illustration 3 (102), where, at least, an anti-freeze phase advancer is fit to counterbalance the fluid expansion in a body valve internal interspace Illustration 3 (121).

6. Device according to claim 5, where the body valve Illustration 3 (100) include an appropriate hollow Illustration 3 (10) fit to hold the elastomeric buffer Illustration 3 (30).

7. Device according to claim 5, where the hollow Illustration 3 (10) in which the elastomeric buffer Illustration 3 (30) is set, stands down the ball Illustration 3 (102), so that it can compensate the fluid expansion contained in hollow Illustration 3 (121) between the ball Illustration 3 (102) and the body valve Illustration 3 (100).

8. Device according to claim 5, which includes at least another buffer Illustration 6 (40) upon the valve in an interconnection area Illustration 6 (111) with a piping.

9. Device according to claim 1, defining a pipe fitting connector.

10. Device according to any of the vindications above, where an anti-freeze phase advancer is realised by the mean of plug made of an elastic material bordering on a compressible volume applied from the outside through an appropriate hole.
